# FASCICULE DE BREVET EUROPEEN

(11) **EP 2 393 690 B1**
(45) Date de publication et mention de la délivrance du brevet: **15.05.2013**
(21) Numéro de dépôt: 10708263.8
(22) Date de dépôt: 01.02.2010
(51) Int. Cl.: B60N 2/58, B60N 2/70

(54) **DOSSIER DE SIEGE DE VEHICULE COMPRENANT UN COMPLEXE DE REVETEMENT ET PROCEDE POUR REALISER UN TEL DOSSIER**
FAHRZEUGSITZ-RÜCKENLEHNE MIT EINEM ÜBERZUG-KOMPLEX UND VERFAHREN ZUR HERSTELLUNG EINER DERARTIGEN RÜCKENLEHNE
BACKREST FOR A VEHICLE SEAT INCLUDING A COATING COMPLEX, AND METHOD FOR MAKING SUCH A BACKREST

(30) Priorité: 03.02.2009 FR 0950665
(43) Date de publication de la demande: 14.12.2011
(73) Titulaire: Faurecia Sièges d'automobile, 92000 Nanterre (FR)
(72) Inventeur: COUEDRO, Régis, F-91150 Etampes (FR); ETIENNE, Fabrice, F-90000 Belfort (FR); POULET, Etienne, F-70220 St Bresson (FR); BESNARD, Nicolas, F-45300 Sermaises du Loiret (FR)
(74) Mandataire: Cabinet Plasseraud
(86) Numéro de dépôt international: PCT/FR2010/050163
(87) Numéro de publication internationale: WO 2010/089502

(56) Documents cités:
- EP-A2- 2 003 089
- WO-A1-01/32413
- FR-A1- 2 877 286
- US-A- 4 715 916
- US-A- 4 860 415

## Description

L'invention concerne un dossier de siège, en particulier un dossier de siège de véhicule automobile et un procédé pour réaliser un siège.

Les documents FR-2 877 286 A1 (correspondant au préambule de la revendication indépendante 1 de produit) et EP-2 003 089 A2 divulguent un dossier de siège présentant une face avant destinée à recevoir un occupant et une face arrière opposée à la face avant, ledit dossier comprenant une structure, une matelassure portée par la structure et un élément d'habillage en forme de sac recouvrant la structure et la matelassure.

On comprendra par forme propre le fait que le complexe de revêtement est apte à retrouver de lui-même et à conserver cette forme propre (déterminée) par retour élastique après déformation.

L'invention vise à simplifier la réalisation de l'élément d'habillage, à améliorer son aspect esthétique et à faciliter la mise en place de l'élément d'habillage sur un dossier de siège.

A cet effet, conformément à l'invention, l'élément d'habillage comporte un complexe de revêtement présentant une forme propre et disposé en face arrière dudit dossier, le complexe étant lié à une portion principale de l'élément d'habillage s'étendant sur la face avant dudit dossier.

Ainsi, l'élément d'habillage peut par conséquent présenter des formes plus variées et son maintien sur le dossier du siège nécessite moins de moyens.

Selon une caractéristique complémentaire, le complexe de revêtement présente de préférence des zones de densités différentes.

Ainsi, la souplesse du complexe de revêtement peut être aisément adaptée pour offrir une rigidité élevée aux endroits souhaités en y augmentant la densité de la mousse.

Selon une caractéristique complémentaire conforme à l'invention, de préférence le complexe de revêtement présente une première zone sensiblement plane et une deuxième zone présentant des variations par rapport au plan de la première zone, et la densité du complexe de revêtement dans la deuxième zone est supérieure à la densité de la mousse dans la première zone.

La zone sensiblement plane pouvant conserver sa forme propre en ayant une rigidité plus faible que la zone présentant un relief, on adapte ainsi la rigidité du complexe de revêtement en fonction des contraintes auxquelles sont soumises chacune des zones qui le constituent.

De préférence, la densité du complexe de revêtement dans la deuxième zone est au moins trois fois plus élevée que la densité du complexe de revêtement dans la première zone.

Selon une autre caractéristique conforme à l'invention, le complexe de revêtement est de préférence lié à la portion principale de l'élément d'habillage par couture.

Selon une autre caractéristique, de préférence l'élément d'habillage est apte à passer d'une première position en forme de sac à une deuxième position en forme de sac en se retournant sur lui-même par déroulement, de sorte qu'une face envers visible dans la première position soit dissimulée dans la deuxième position et inversement qu'une face endroit dissimulée dans la première position soit visible dans la deuxième position.

Ainsi, la mise en place de l'élément d'habillage sur la matelassure et l'armature du siège est simplifiée.

Selon une autre caractéristique conforme à l'invention, de préférence l'élément d'habillage présente une ouverture d'accès et l'élément d'habillage présente au moins une fente s'étendant à partir de l'ouverture d'accès, ladite fente présentant deux bords et ledit élément d'habillage présentant un dispositif de fixation apte à maintenir de manière libérable les deux bords de la fente au contact l'un de l'autre.

Ainsi, l'élément d'habillage peut être mis en place plus facilement sur la matelassure et l'armature du siège.

Selon une autre caractéristique conforme à l'invention, de préférence le complexe de revêtement présente une portion centrale et une portion périphérique, la portion centrale définissant un renfoncement en retrait par rapport à la partie périphérique.

Ainsi, on réalise aisément un renfoncement dans le siège permettant d'offrir plus de place pour le passager situé derrière, en particulier pour ses jambes.

L'invention concerne en outre un procédé pour réaliser un dossier de siège, dans lequel on réalise les étapes suivantes :
a) fournir un élément support,
b) pulvériser de la mousse de type polyuréthane sur une face de cet élément support,
c) placer un premier morceau de revêtement, sur une matrice de formage,
d) puis presser, à température ambiante, ledit élément support contre ledit premier morceau de revêtement, avec la couche de mousse, non-encore complètement polymérisée, interposée entre l'élément support et ledit premier morceau de revêtement,
e) après polymérisation de la mousse, séparer le sous-ensemble ainsi obtenu de la matrice de formage,
f) assembler au moins un autre morceau de revêtement au premier morceau pour former un élément d'habillage en forme de sac,
g) placer une matelassure sur une structure de dossier de siège de véhicule automobile et recouvrir la structure et la matelassure avec l'élément d'habillage.

Selon une autre caractéristique conforme à l'invention, de préférence on réalise l'étape f) par couture.

D'autres caractéristiques et avantages de la présente invention apparaîtront dans la description détaillée suivante, se référant aux dessins annexés dans lesquels :
- la figure 1 est une représentation schématique de côté, partiellement écorchée, d'un siège de véhicule,
- la figure 2 illustre en perspective le siège de véhicule avant assemblage d'un élément d'habillage sur une structure portant un garnissage, conformément à un premier mode de réalisation,
- la figure 3 illustre en perspective le dossier après assemblage,
- la figure 4 est une vue en coupe suivant la ligne repérée IV-IV à la figure 3,

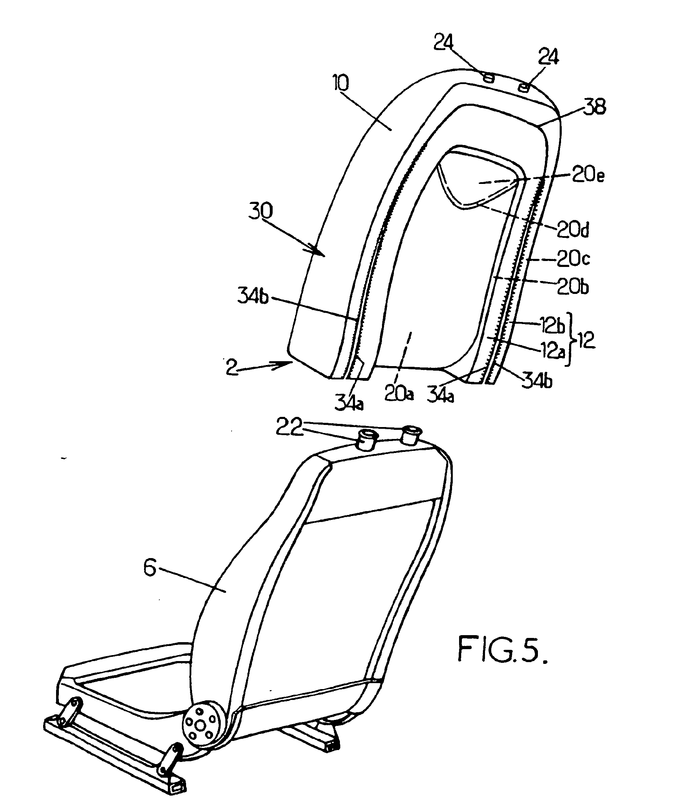

- la figure 5 illustre en perspective le siège de véhicule avant assemblage d'un élément d'habillage sur une structure portant un garnissage, conformément à un deuxième mode de réalisation,
- la figure 6 illustre schématiquement une première étape de la réalisation d'une portion dorsale de l'élément d'habillage,
- la figure 7 illustre schématiquement une deuxième étape de la réalisation d'une portion dorsale de l'élément d'habillage,
- la figure 8 illustre schématiquement une troisième étape de la réalisation d'une portion dorsale de l'élément d'habillage,
- la figure 9 illustre la portion dorsale de l'élément d'habillage en coupe longitudinale.

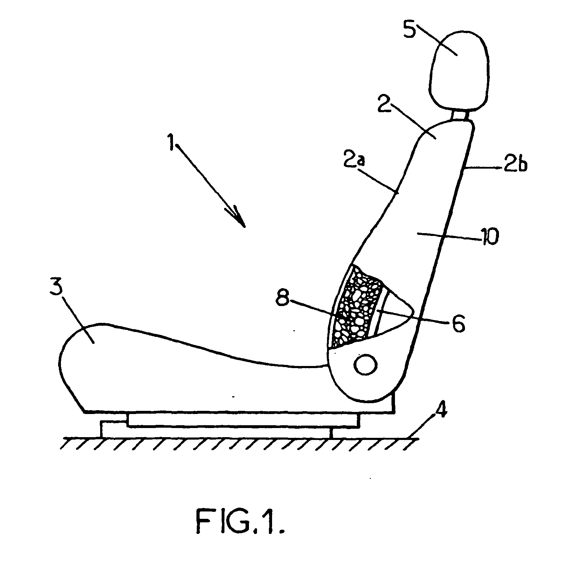

A la figure 1, un siège de véhicule 1 est représenté de manière schématique. Il comprend essentiellement une assise 3 reposant sur un plancher 4, un dossier 2 articulé en rotation par rapport à l'assise 3 et supportant un appui-tête 5. Le dossier 2 présente une face avant 2a sur laquelle est destinée à venir reposer le dos d'un passager du véhicule et une face arrière 2b opposée à la face avant 2a. Le dossier 2 comprend essentiellement une structure 6 et un garnissage comportant une matelassure 8 portée par la structure 6 et un élément d'habillage 10 recouvrant la structure 6 et la matelassure 8.

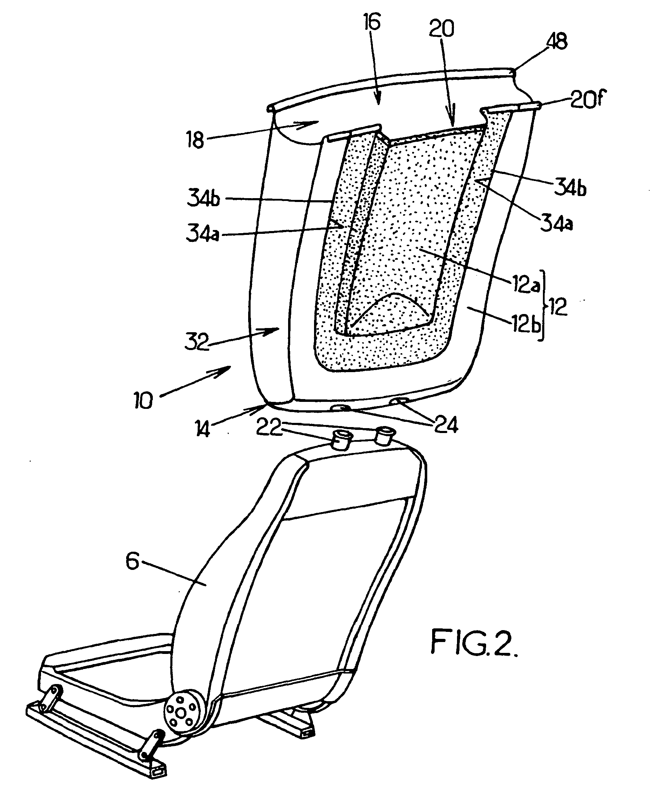

Tel qu'illustré en particulier aux figures 2 à 4, l'élément d'habillage 10 comprend essentiellement un complexe de revêtement s'étendant au dos 2b du siège. Le complexe de revêtement présente une capacité de déformation très élevée et présente une forme propre, de sorte qu'après déformation il reprend toujours la même forme par retour élastique. Autrement dit, le complexe de revêtement présente une certaine rigidité et une élasticité très élevé. Par contre, le revêtement souple 12 ne présente aucune forme propre, de sorte qu'il suit la forme de la surface sur laquelle il s'étend. Autrement dit, la rigidité du revêtement 12 est extrêmement faible, quasiment nulle.

Le complexe de revêtement 20 présente une zone principale 20a s'étendant sensiblement suivant un plan P, séparée en deux parties 20a, 20e par une rainure 20d sensiblement en forme de V et une zone périphérique 20c également sensiblement plane mais décalée par rapport au plan P de la zone principale 20a, 20c à laquelle elle est reliée par une zone de raccordement 20b. La zone de raccordement 20d et la zone périphérique 20e s'étendent autour d'une partie au moins de la zone principale 20a, 20c.

Le revêtement 12 comprend une portion dorsale 12a et une portion principale 12b fixée à la portion dorsale 12a. La portion dorsale 12a est disposée en face arrière 2b du dossier, tandis que la portion principale 12b s'étend sur le reste du dossier 2 et principalement sur la face avant 2a. Le revêtement 12 présente une face endroit 30 qui est visible lorsque le dossier 2 est complètement réalisé et une face envers 32 qui est dissimulée lorsque le dossier 2 est complètement réalisé.

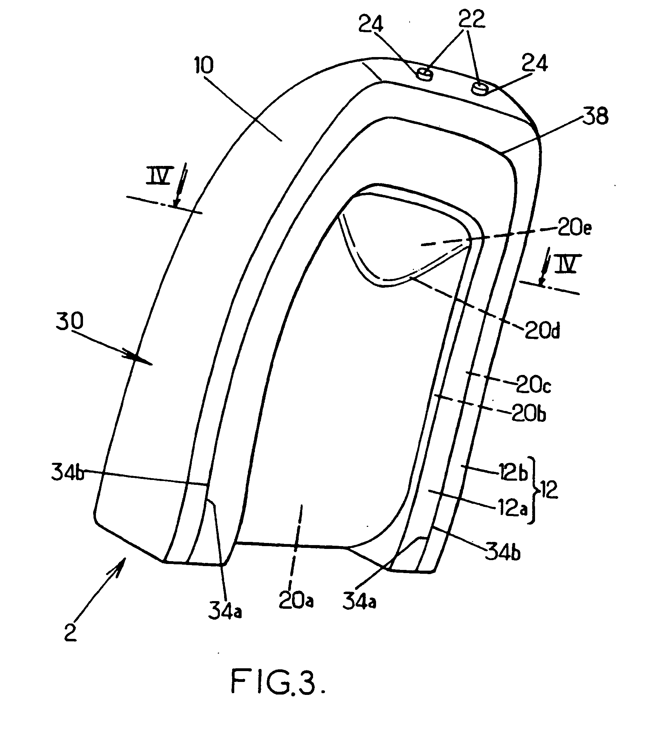

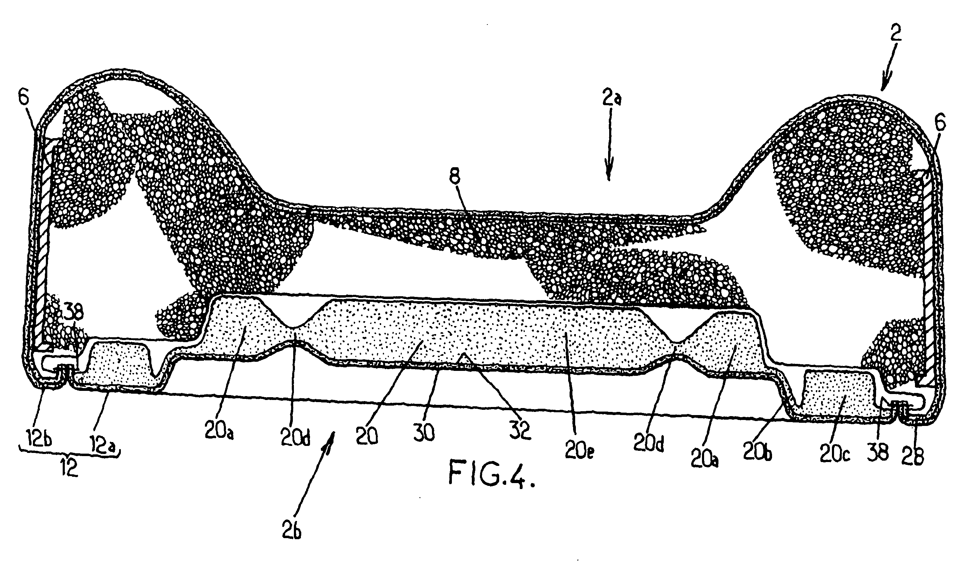

La portion dorsale 12a du revêtement 12 présente un bord 34a et la portion principale 12b du revêtement 12 présente un bord 34b s'étendant en regard du bord 34a de la portion dorsale 12a du revêtement 12. Tel qu'illustré aux figures 3 et 4, lorsque le dossier 2 est complètement réalisé la portion dorsale 12a du revêtement 12 et la portion principale 12b du revêtement s'étendent bord à bord, de sorte que les bords 34a, 34b sont au contact l'un de l'autre, ils sont maintenus l'un à l'autre pour une partie directement par une couture 38.

Par ailleurs, la portion principale 12b du revêtement présente deux trous 24 pour le passage de deux tubes 22 fixés en partie supérieure de la structure 6 et destinés à recevoir des tiges de l'appui-tête 5.

Tel qu'illustré en particulier à la figure 2, l'élément d'habillage 10 se présente sous la forme d'un sac délimitant une cavité 16 et s'étendant entre une extrémité ouverte définissant une ouverture 18 d'accès à la cavité 16 et une extrémité obturée 14. Pour assembler l'élément d'habillage 10 avec la structure 6 sur laquelle on a positionné la matelassure 8, l'élément d'habillage est disposé la tête en bas au-dessus de la structure 6. En outre, l'élément d'habillage 10 est retourné sur lui-même, de sorte que la face envers 32 est visible et que la face endroit 30 est dissimulée, tournée vers l'intérieur de la cavité 16. Puis, après avoir positionné les tubes-support 22 dans les trous de passage 24, on retourne l'élément d'habillage 10 sur lui-même en le déroulant vers le bas (comme une chaussette) sur la structure 6 et la matelassure 8.

Il sera noté que sur la figure 2, la nappe métallique fixée de manière usuelle sur la structure 6, afin de supporter la matelassure 8 n'a pas été représentée.

La figure 4 illustre une variante concernant l'assemblage de l'élément d'habillage sur la structure 6, sur laquelle on a positionné la matelassure. Selon cette variante, l'élément d'habillage 10 est disposé au-dessus de la structure 6 et de la matelassure, mais il n'est pas la tête en bas, ni retourné sur lui-même. Autrement dit, la face endroit 30 est visible et la face envers 32 est tournée vers l'intérieur de la cavité 16 et la partie supérieure du dossier est présentée face à l'ouverture d'accès 18 et introduite progressivement de plus en plus profondément (ainsi que la matelassure 8) dans la cavité 16, jusqu'à ce que les tubes-support disposés en partie supérieure du dossier passent à travers les trous de passage 24.

La présence de fentes 34 contribue alors très efficacement à l'insertion de la structure 6 et de la matelassure 8 dans la cavité 16. En effet, la portion dorsale 12a du revêtement 12 et la portion principale 12b du revêtement ne sont maintenus bord à bord qu'en partie par la couture 38. Les bords 34a, 34b sont en outre maintenus de manière libérable par l'intermédiaire de deux dispositifs de fixation 36 s'étendant longitudinalement entre les bords 34a, 34b de la portion dorsale 12a et de la portion principale 12b. Ces dispositifs de fixation 36 sont de préférence constitués par une fermeture à glissière, des crochets, un zip ou analogue. Lorsque les dispositifs de fixation 36 libèrent les bords 34a, 34b, ceux-ci sont séparés par la fente 34.

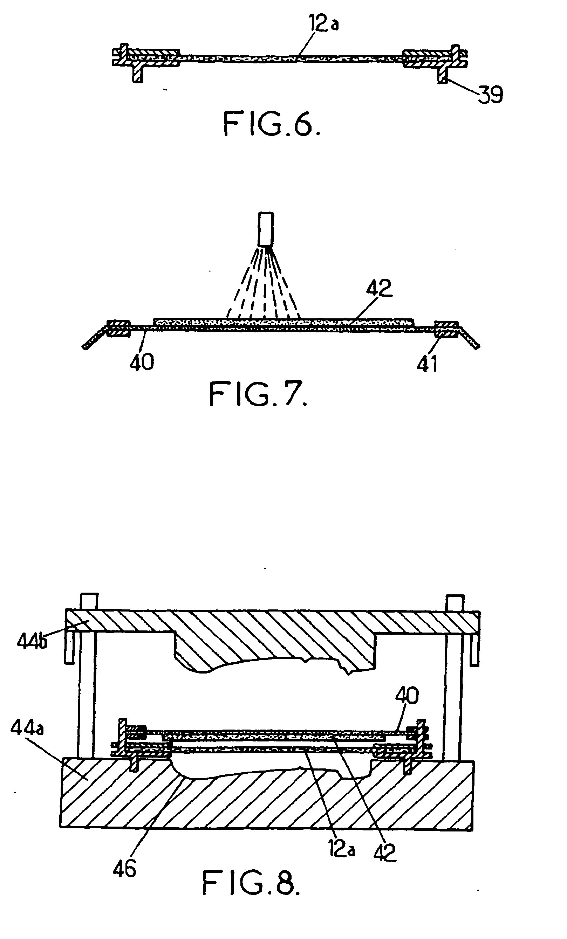

Les figures 6 à 9 illustrent la réalisation de l'élément d'habillage 10. Tel qu'illustré aux figures 6 et 7, on réalise tout d'abord la portion dorsale 12a du revêtement 12 que l'on maintient sur un premier cadre 39 et on réalise une couche de mousse 42, dans le mode de réalisation illustré, par pulvérisation sur un film 40 maintenu sur un deuxième cadre 41. De préférence, le film 40 est réalisé en polyéthylène et la mousse 42 en polyuréthane. De préférence, la couche de mousse 42 est d'épaisseur sensiblement constante.

Puis, tel qu'illustré à la figure 8, on vient positionner la portion dorsale 12a du revêtement et le film 40 portant la couche de mousse 42 sur une matrice 44a de formage présentant une empreinte 46. La couche de mousse 42 est disposée entre la portion dorsale 12a du revêtement 12 et le film 40 en attendant une légère polymérisation de la couche de mousse 42 après pulvérisation illustrée à la figure 7.

Ensuite, on rapproche un poinçon 44b de la matrice 44a, de sorte que la portion dorsale 12a du revêtement épouse les formes de l'empreinte 46 de la matrice 44a et que la mousse 42 polymérise, comprimée entre la portion dorsale 12a du revêtement et le film 40.

Enfin, on démoule la pièce obtenue et on retire le film 40. On obtient ainsi complexe de revêtement constitué par la couche de mousse 42 et la portion dorsale 12a du revêtement, la couche de mousse 42 étant incrustée dans les aspérités de la portion dorsale 12a du revêtement. Le temps de (début de) polymérisation entre la réalisation de la couche de mousse 42, tel qu'illustré à la figure 7 et l'application d'une pression entre la couche de mousse 42 et la portion dorsale 12a du revêtement détermine la profondeur d'incrustation de la mousse dans la portion dorsale 12a du revêtement.

Ensuite, on assemble par couture 38 la portion dorsale 12a et la portion principale 12b du revêtement, et les éléments de fixation 36. L'élément d'habillage 10 est alors complètement réalisé et on vient l'assembler avec la structure 6 et la matelassure 8 pour réaliser le dossier 2, tel qu'illustré à la figure 2 et décrit précédemment. Pour faciliter la mise en place de l'élément d'habillage 10 sur la structure 6 et la matelassure 8, les bords 34a, 34b de la portion dorsale 12a et de la portion principale 12b du revêtement sont libérés s'ils sont reliés par les éléments de fixation 36, puis une fois l'assemblage réalisé, on referme ces éléments de fixation de manière à ramener au contact l'une de l'autre les bords 34a,34b de la portion principale 12a et de la portion dorsale 12b du revêtement.

Enfin, on notera que le complexe de revêtement possède une zone d'attache 20f, en forme de crochet à son extrémité délimitant l'ouverture d'accès 18, cette zone extrême d'attache 20f étant apte à coopérer avec une portion de crochet 48 complémentaire maintenue sur la portion principale 12b du revêtement, afin de maintenir ensemble la face avant 2a et la face arrière 2b de l'élément d'habillage 10.

Tel qu'illustré en particulier à la figure 4, une sous-couche 28 en mousse d'environ 1 à 2 millimètre(s) est fixée sur la face envers 32 de la portion principale 12b du revêtement, tandis que la mousse vient directement au contact de la portion dorsale 12a du revêtement, sans interposition d'une sous-couche. Ainsi, le maintien de la portion dorsale 12a du revêtement sur le complexe de revêtement s'effectue mécaniquement entre la matière du revêtement 12 et la mousse 20 par l'action combinée de la polymérisation et du pressage dans la matrice. L'adhésion est par conséquent plus efficace.

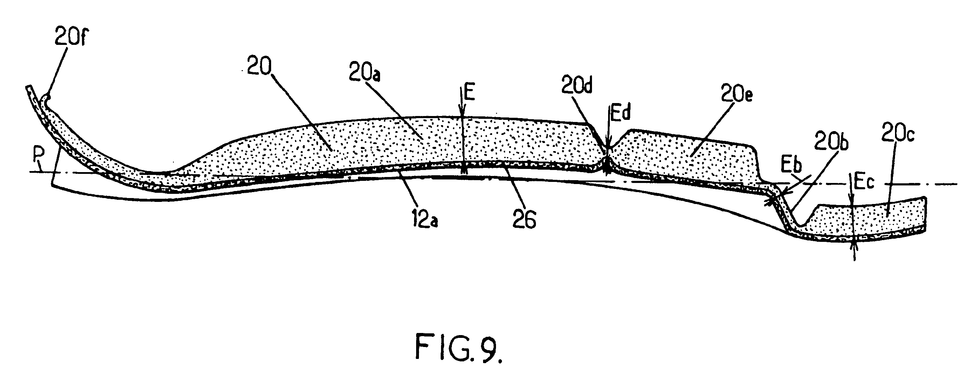

Tel qu'illustré à la figure 9, les différentes zones 20a, 20b, 20c, 20d, 20e du complexe de revêtement présentent des épaisseurs différentes. Ainsi, la zone principale 20a, 20c du complexe de revêtement présente une épaisseur E d'environ 10 à 50 millimètres de mousse, la compression dans cette zone ayant été relativement faible lors du pressage. L'épaisseur E_{c} de la couche de mousse 20 de la zone périphérique 20c est sensiblement égale à l'épaisseur E de la zone principale 20a, 20c, voire légèrement inférieure. La zone 20d de rainure présente une épaisseur E_{d} de l'ordre de 5 à 10 millimètres, voire inférieur, afin d'augmenter la rigidité de la mousse dans cette zone et avoir une forme de style bien nette. La zone de raccordement 20b ayant une fonction de structure présente une épaisseur E_{b} beaucoup plus faible, de quelques dixièmes de millimètres à 2 millimètres, afin de lui conférer une rigidité très élevée. Avantageusement, l'épaisseur E_{b} de la zone de raccordement est 3 fois, et de préférence 10 fois, inférieure à l'épaisseur E de la zone principale 20a, 20c.

Avantageusement, le complexe de revêtement présente un module de flexion compris entre 30 et 600 MPa, et de préférence globalement de l'ordre de 150 Mpa.

De préférence, le revêtement 12 est le même pour la zone dorsale 12a et la zone principale 12b et est constituée d'un textile tissé, non tricoté, une grille polyester ou polyamide, un film en polyuréthane ou polychlorure de vinyle ou tout autre matière ayant des qualités esthétique et de souplesse. La mousse 42 est de préférence constitué par du polyuréthane, ou tout autre matériau permettant à la mousse de pénétrer dans les interstices de la partie dorsale 12a du revêtement 12 afin de figer sa forme.

## Revendications

1. Dossier (2) de siège (1) de véhicule automobile présentant une face avant (2a) destinée à recevoir un occupant et une face arrière (2b) opposée à la face avant (2a), ledit dossier comprenant une structure (6), une matelassure (8) portée par la structure (6) et un élément d'habillage (10) en forme de sac recouvrant la structure (6) et la matelassure (8), **caractérisé en ce que** l'élément d'habillage (10) comporte un complexe de revêtement (20, 12a) présentant une forme propre et disposé en face arrière (2b) dudit dossier (2), le complexe étant lié à une portion principale (12b) de l'élément d'habillage (10) s'étendant sur la face avant (2a) dudit dossier.

2. Dossier de siège selon la revendication 1 dans lequel le complexe de revêtement (20) présente des zones (20a, 20b, 20c, 20d, 20e) de densités différentes.

3. Dossier de siège selon la revendication précédente dans lequel le complexe de revêtement (20, 12a) présente une première zone (20a) sensiblement plane et une deuxième zone (20b, 20c) présentant des variations par rapport au plan (P) de la première zone (20a), et la densité du complexe de revêtement (20, 12a) dans la deuxième zone (20b, 20c) est supérieure à la densité du complexe de revêtement (20, 12a) dans la première zone (20a).

4. Dossier de siège selon la revendication précédente, dans lequel la densité du complexe de revêtement (20, 12a) dans la deuxième zone (20b, 20c) est au moins trois fois plus élevée que la densité du complexe de revêtement (20, 12a) dans la première zone (20a).

5. Dossier selon l'une quelconque des revendications précédentes dans lequel le complexe de revêtement étant lié à la portion principale (12b) de l'élément d'habillage (10) par couture (38).

6. Dossier de siège selon l'une quelconque des revendications précédentes dans lequel l'élément d'habillage (10) est apte à passer d'une première position en forme de sac à une deuxième position en forme de sac en se retournant sur lui-même par déroulement, de sorte qu'une face envers (32) visible dans la première position soit dissimulée dans la deuxième position et inversement qu'une face endroit (30) dissimulée à l'intérieur dans la première position soit visible dans la deuxième position.

7. Dossier de siège selon l'une quelconque des revendications précédentes présentant une ouverture d'accès (18) et l'élément d'habillage présente au moins une fente (34) s'étendant à partir de l'ouverture d'accès (18), ladite fente (34) présentant deux bords (34a, 34b) et ledit élément d'habillage présentant un dispositif de fixation (36) apte à maintenir de manière libérable les deux bords (34a, 34b) de la fente (34) au contact l'un de l'autre.

8. Dossier de siège selon l'une quelconque des revendications précédentes dans lequel le complexe de revêtement (20, 12a) présente une portion centrale (20a, 20d, 20e) et une portion périphérique (20c), la portion centrale (20a, 20d, 20e) définissant un renfoncement en retrait par rapport à la partie périphérique (20c).

9. Procédé pour réaliser un dossier (2) de siège, dans lequel on réalise les étapes suivantes :
a) fournir un élément support (40),
b) pulvériser de la mousse (42) de type polyuréthane sur une face de cet élément support (40),
c) placer un premier morceau de revêtement (12a), sur une matrice de formage (44a),
d) puis presser, à température ambiante, ledit élément support (40) contre ledit premier morceau de revêtement (12a), avec la couche de mousse (42), non-encore complètement polymérisée, interposée entre l'élément support (40) et ledit premier morceau de revêtement (12a),
e) après polymérisation de la mousse (42), séparer le sous-ensemble ainsi obtenu de la matrice de formage,
f) assembler au moins un autre morceau de revêtement (12b) au premier morceau (12a) pour former un élément d'habillage (10) en forme de sac,
g) placer une matelassure (8) sur une structure (6) de dossier (2) de siège (1) de véhicule automobile et recouvrir la structure (6) et la matelassure (8) avec l'élément d'habillage (10).

10. Procédé selon la revendication précédente, dans lequel on réalise l'étape f) par couture.

## Patentansprüche

1. Rückenlehne (2) eines Fahrzeugsitzes (1) mit einer Vorderseite (2a), die dazu ausgebildet ist, einen Insassen aufzunehmen, und einer Rückseite (2b) gegenüber der Vorderseite (2a), wobei die Rückenlehne eine Struktur (6), eine von der Struktur (6) getragene Polsterung (8) und ein Verkleidungselement (10) in Form eines Sacks umfasst, das die Struktur (6) und die Polsterung (8) bedeckt, **dadurch gekennzeichnet, dass** das Verkleidungselement (10) einen Überzugkomplex (20, 12a) aufweist, der eine eigene Form hat und an der Rückseite (2b) der Rückenlehne (2) angeordnet ist, wobei der Komplex mit einem Hauptteil (12b) des Verkleidungselements (10) verbunden ist, der sich über die Vorderseite (2a) der Rückenlehne erstreckt.

2. Rückenlehne nach Anspruch 1, wobei der Überzugkomplex (20) Bereiche (20a, 20b, 20c, 20d, 20e) unterschiedlicher Dichte aufweist.

3. Rückenlehne nach dem vorangehenden Anspruch, wobei der Überzugkomplex (20, 12a) einen ersten Bereich (20a) aufweist, der im Wesentlichen eben ist, und einen zweiten Bereich (20b, 20c) aufweist, der bezüglich der Ebene (P) von dem ersten Bereich (20a) Abweichungen aufweist, wobei die Dichte des Überzugkomplexes (20, 12a) im zweiten Bereich (20b, 20c) größer ist als die Dichte des Überzugkomplexes (20, 12a) im ersten Bereich (20a).

4. Rückenlehne nach dem vorangehenden Anspruch, wobei die Dichte des Überzugkomplexes (20, 12a) im zweiten Bereich (20b, 20c) wenigstens dreimal höher ist als die Dichte des Überzugkomplexes (20, 12a) im ersten Bereich (20a).

5. Rückenlehne nach einem der vorangehenden Ansprüche, wobei der Überzugkomplex durch eine Naht (38) mit dem Hauptteil (12b) des Verkleidungselements (10) verbunden ist.

6. Rückenlehne nach einem der vorangehenden Ansprüche, wobei das Verkleidungselement (10) dazu geeignet ist, durch Umstülpen mittels Abrollen von einer ersten Stellung in Sackform zu einer zweiten Stellung in Sackform zu gelangen, so dass eine in der ersten Stellung sichtbare Unterseite (32), in der zweiten Stellung versteckt ist, und so dass umgekehrt eine in der ersten Stellung im Inneren versteckte Oberseite (30) in der zweiten Stellung sichtbar ist.

7. Rückenlehne nach einem der vorangehenden Ansprüche, die eine Zugangsöffnung (18) aufweist und wobei das Verkleidungselement wenigstens einen Schlitz (34) aufweist, der sich von der Zugangsöffnung (18) erstreckt, wobei der Schlitz (34) zwei Ränder (34a, 34b) aufweist und wobei das Verkleidungselement ein Befestigungsmittel (36) aufweist, das dazu geeignet ist, die beiden Ränder (34a, 34b) des Schlitzes (34) lösbar in gegenseitigem Kontakt zu halten.

8. Rückenlehne nach einem der vorangehenden Ansprüche, wobei der Uberzugkomplex (20, 12a) einen mittleren Abschnitt (20a, 20d, 20e) und einen Randabschnitt (20c) aufweist, wobei der mittlere Abschnitt (20a, 20d, 20e) eine Vertiefung begrenzt, die bezüglich des Randbereichs (20c) zurückgesetzt ist.

9. Verfahren zur Herstellung einer Sitzrückenlehne (2), bei dem folgende Schritte ausgeführt werden:
a) Bereitstellen eines Stützelements (40),
b) Pulverisieren eines Schaums (42) vom Polyurethantyp auf einer Fläche des Stützelements (40),
c) Platzieren eines ersten Überzugteils (12a) auf einer Verformungsmatrix (44a),
d) dann Pressen des Stützelements (40) gegen das erste Überzugteil (12a) bei Raumtemperatur, wobei die Schaumschicht (42) noch nicht vollständig polymerisiert zwischen dem Stützelement (40) und dem ersten Überzugteil (12a) eingefügt wird,
e) nach Polymerisation des Schaums (42) Trennen der so erhaltenen Untereinheit von der Verformungsmatrix,
f) Anbringen wenigstens eines anderen Überzugteils (12b) am ersten Teil (12a) zum Bilden eines Verkleidungselements (10) in Sackform,
g) Platzieren einer Polsterung (8) auf einer Struktur (6) einer Rückenlehne (2) eines Fahrzeugsitzes (1) und Bedecken der Struktur (6) und der Polsterung (8) mit dem Verkleidungselement (10).

10. Verfahren nach dem vorangehenden Anspruch, wobei Schritt f) durch Nähen ausgeführt wird.

## Claims

1. Backrest (2) for a seat (1) of an automotive vehicle, having a front face (2a) designed to receive an occupant and a rear face (2b) opposing the front face (2a), said backrest comprising a structure (6), a padding (8) supported by the structure (6) and a cover element (10) in the form of a bag covering the structure (6) and padding (8), **characterised in that** the cover element (10) comprises a trimming complex (20, 12a) having an own shape and disposed on the rear face (2b) of said backrest (2) , the complex being joined to a main portion (12b) of the cover element (10) extending across the front face (2a) of said backrest.

2. Seat backrest as claimed in claim 1, in which the trimming complex (20) has zones (20a, 20b, 20c, 20d, 20e) of different densities.

3. Seat backrest as claimed in the preceding claim, in which the trimming complex (20, 12a) has a first, substantially planar zone (20a) and a second zone (20b, 20c) having variations relative to the plane (P) of the first zone (20a), and the density of the trimming complex (20, 12a) in the second zone (20b, 20c) is higher than the density of the trimming complex (20, 12a) in the first zone (20a).

4. Seat backrest as claimed in the preceding claim, in which the density of the trimming complex (20, 12a) in the second zone (20b, 20c) is at least three times higher than the density of the trimming complex (20, 12a) in the first zone (20a).

5. Seat backrest as claimed in any one of the preceding claims, in which the trimming complex is joined to the main portion (12b) of the cover element (10) by stitching (38).

6. Seat backrest as claimed in any one of the preceding claims, in which the cover element (10) is designed to be transferred from a first position in the form of a bag to a second position in the form of a bag by rolling it back on itself so that a wrong side (32) visible in the first position is concealed in the second position and conversely, a right side (30) concealed on the inside in the first position is visible in the second position.

7. Seat backrest as claimed in any one of the preceding claims, having an access opening (18) and the cover element has at least one slot (34) extending from the access opening (18), said slot (34) having two edges (34a, 34b) and said cover element having a fixing device (36) designed to hold the two edges (34a, 34b) of the slot (34) in contact with one another in a releasable manner.

8. Seat backrest as claimed in any one of the preceding claims, in which the trimming complex (20, 12a) has a central portion (20a, 20d, 20e) and a peripheral portion (20c), the central portion (20a, 20d, 20e) defining a recessed indentation relative to the peripheral part (20c).

9. Method of producing a seat backrest (2), whereby the following steps are implemented:
a) providing a support element (40),
b) spraying polyurethane type foam (42) onto a face of this support element (40),
c) placing a first trimming piece (12a) on a forming die (44a),
d) then pressing said support element (40), at ambient temperature, against said first trimming piece (12a) with the foam layer (42), as yet not completely polymerised, interposed between the support element (40) and said first trimming piece (12a),
e) once the foam (42) has polymerised, removing the sub-assembly thus obtained from the forming die,
f) assembling at least one other trimming piece (12b) with the first trimming piece (12a) to form a cover element (10) in the form of a bag,
g) placing a padding (8) on a structure (6) of a backrest (2) of a seat (1) of an automotive vehicle and covering the structure (6) and padding (8) with the cover element (10).

10. Method as claimed in the preceding claim, in which step f) is effected by stitching.
